(19) **Europäisches Patentamt**
**European Patent Office**
**Office européen des brevets**

(11) **EP 2 710 283 B1**

(12) **EUROPÄISCHE PATENTSCHRIFT**

(45) Veröffentlichungstag und Bekanntmachung des Hinweises auf die Patenterteilung:
**29.07.2015  Patentblatt 2015/31**

(21) Anmeldenummer: **12709594.1**

(22) Anmeldetag: **13.03.2012**

(51) Int Cl.:
*F16H 61/16* (2006.01)    *F16H 61/06* (2006.01)
*F16H 61/70* (2006.01)

(86) Internationale Anmeldenummer:
**PCT/EP2012/054336**

(87) Internationale Veröffentlichungsnummer:
**WO 2012/156112 (22.11.2012 Gazette 2012/47)**

(54) **VERFAHREN ZUM BESTIMMEN EINES SCHALTABLAUFES EINES ÜBERSETZUNGSWECHSELS EINER GETRIEBEEINRICHTUNG EINES FAHRZEUGANTRIEBSSTRANGES**

METHOD FOR DETERMINING A SHIFT SEQUENCE OF A CHANGE OF TRANSMISSION RATIO OF A GEAR MECHANISM DEVICE OF A VEHICLE DRIVE TRAIN

PROCÉDÉ PERMETTANT DE DÉTERMINER UN DÉROULEMENT DE CHANGEMENT DE VITESSE D'UN CHANGEMENT DE RAPPORT D'UN DISPOSITIF DE TRANSMISSION D'UNE CHAÎNE CINÉMATIQUE DE VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.05.2011   DE 102011075913**

(43) Veröffentlichungstag der Anmeldung:
**26.03.2014   Patentblatt 2014/13**

(73) Patentinhaber: **ZF Friedrichshafen AG**
**88038 Friedrichshafen (DE)**

(72) Erfinder:
• **MÜNCH, Eckehard**
  **88048 Friedrichshafen (DE)**

• **HEITZ, Uwe**
  **88677 Markdorf (DE)**
• **ZANELLA, Mauro**
  **88046 Friedrichshafen (DE)**
• **SIEGER, Manfred**
  **72250 Freudenstadt (DE)**
• **GEIS, Jörg**
  **88677 Markdorf (DE)**

(56) Entgegenhaltungen:
EP-A1- 0 670 440        EP-A2- 0 867 643
DE-A1-102008 008 065    US-A- 5 620 392

**Beschreibung**

Die Erfindung betrifft ein Verfahren zum Bestimmen eines Schaltablaufes eines Übersetzungswechsels einer Getriebeeinrichtung gemäß der im Oberbegriff des Patentanspruches 1 näher definierten Art. Ein derartiges Verfahren ist z.B. aus der DE-A-10 2008 00 8065 bekannt.

Im Allgemeinen ist ein Getriebe eines Fahrzeugantriebsstranges, wie eines Fahrzeugantriebsstranges eines Nutzfahrzeuges oder einer mobilen Arbeitsmaschine, dazu vorgesehen, Leistung mechanisch von der Kurbelwelle des Motors in ein anderes Drehzahl- und Drehmomentniveau zu wandeln und an Antriebsräder eines Abtriebs weiterzuleiten. Getriebeeinrichtungen von Nutzfahrzeugen bestehen häufig aus zwei seriell angeordneten Schaltgetrieben. Eines der Getriebe, das auch als Splitter bezeichnet wird, realisiert dabei kleine Übersetzungssprünge, während das andere Getriebe, das auch als Gruppe oder als Hauptgetriebe bezeichnet wird, zur Darstellung großer Übersetzungssprünge vorgesehen ist. Derartige Kombinationen erlauben es, eine hohe Anzahl an Übersetzungsstufen zu realisieren.

Sowohl als Splitter als auch als Gruppe ausgeführte Getriebe können automatische Lastschaltgetriebe sein. Während Übersetzungswechseln in derartigen und zwei seriell angeordnete Schaltgetriebe umfassenden Getriebeeinrichtungen treten prinzipiell zwei verschiedene Arten von Lastschaltungen auf, so genannte einfache Lastschaltungen und so genannte Gruppen-Wechsel-Lastschaltungen. Während einfacher Lastschaltungen wird zur Durchführung eines angeforderten Übersetzungswechsels lediglich im Bereich des Splitters eine Übersetzung verändert, während bei den Gruppen-Wechsel-Lastschaltungen sowohl im Bereich des Gruppen-als auch im Bereich des Splittergetriebes eine Übersetzungsänderung zur Durchführung des angeforderten Übersetzungswechsels stattfindet.

Während einer Gruppen-Wechsel-Lastschaltung laufen die beiden Lastschaltungen im Bereich des Splittergetriebes und auch im Bereich des Gruppengetriebes zeitgleich ab und müssen entsprechend koordiniert werden, wobei während des Übersetzungswechsels von der Ausgangsübersetzung in die Zielübersetzung der Getriebeeinrichtung ein großer Übersetzungssprung innerhalb der Getriebeeinrichtung zu überwinden ist. Hieraus resultiert eine große Änderung der Drehzahl einer das Gruppengetriebe und das Splittergetriebe miteinander verbindenden Welle, die auch als Zentralwelle bezeichnet wird. Die während der Gruppen-Wechsel-Lastschaltung auftretende große Drehzahländerung der Zentralwelle führt unter Umständen zu einer signifikanten Beeinflussung einer Drehzahl im Bereich des Abtriebs und infolgedessen zu einer erhöhten Bauteilbelastung und kann auch einen Fahrkomfort in unerwünschtem Umfang beeinträchtigen. Diese Nachteile treten insbesondere bei sehr hohen Übersetzungssprüngen oder auch bei einer großen Trägheit der Zentralwelle auf.

Angeforderte Übersetzungswechsel in Getriebeeinrichtungen werden bei aus der Praxis bekannten Verfahren in Abhängigkeit festgelegter Druckverläufe bzw. Verläufe von Drehmomenten verwendet, die wiederum in Abhängigkeit der jeweils vorliegenden Betriebssituation eines Fahrzeugantriebsstranges, unter anderem in Abhängigkeit der aktuellen Schaltungsart, einem aktuell vorliegenden Antriebsmoment einer Antriebsmaschine und dergleichen, ausgewählt werden und in deren Abhängigkeit die am Übersetzungswechsel beteiligten Schaltelemente, wie Kupplungen oder Bremsen, entsprechend betätigt werden. Die Druckverläufe bzw. die Verläufe der im Bereich der Schaltelemente jeweils einzustellenden Drehmomente werden so lange variiert, bis sich ausgehend von einem aktuellen Betriebszustand eines Fahrzeugantriebsstranges und damit auch einer Getriebeeinrichtung jeweils ein gewünschter Drehzahlverlauf in der Getriebeeinrichtung einstellt. Die Applizierung dieser Verläufe erfolgt in Abhängigkeit einer Vielzahl von Betriebsparametern und gestaltet sich daher sehr aufwendig.

Ein Ansatz die Applizierung zu vereinfachen, ist die Verwendung eines mechanischen Getriebemodells zur Bestimmung der Druckverläufe bzw. der im Bereich der Schaltelemente jeweils einzustellenden Drehmomente. Bei der Bestimmung der Druck- bzw. Drehmomentverläufe ist zwischen zwei grundsätzlichen Vorgehensweisen zu unterscheiden. Bei einer Vorgehensweise werden die Druck- bzw. Drehmomentverläufe im Bereich der an der Durchführung eines Übersetzungswechsels beteiligten Schaltelemente direkt über das mechanische Getriebemodell berechnet, wobei hierfür Vereinfachungen am Modell vorzunehmen sind. Im Laufe der Entwicklung stellte sich heraus, dass die Vereinfachungen für manche Fälle nicht akzeptabel sind. Für derartige Fälle werden spezielle Funktionen mit eigenen Applikationsparametern vorgesehen, die jedoch durch eine hohe Komplexität gekennzeichnet sind und einen erhöhten Applikationsaufwand verursachen.

Bei einer weiteren Vorgehensweise erfolgt die Bestimmung der Druck- und Drehmomentverläufe offline mithilfe von Optimierungsansätzen. Eine solche Optimierung aus ist aus der auf Wolfgang Klos zurückgehenden Dissertation aus dem Jahr 2004 mit dem Titel "Gruppenschaltungsansteuerung von Nutzfahrzeuggetrieben", der Uni Stuttgart, Berichte des Institutes für Maschinenkonstruktion und Getriebebau, Prof. Dr.-Ing. H. Binz, Bericht Nr. 508, bekannt.

Verläufe von Betätigungsdrücken, anhand welcher die an der Durchführung einer angeforderten Schaltung bzw. eines angeforderten Übersetzungswechsels einer Getriebeeinrichtung beteiligten Schaltelemente betätigt werden, werden dabei als Rampenfunktionen vorgegeben, wobei die Steigungen der Rampen jeweils die Optimierungsparameter bilden. Eine Optimierung findet jeweils nur für die in den Kraftfluss eines Fahrzeugantriebsstranges zuzuschaltenden bzw. zu schließenden Schaltelemente bzw. Kupplungen statt, während der Verlauf eines im Bereich eines während des Übersetzungswechsels zu öffnenden Schaltelementes im Optimierungsproblem nicht beeinflusst wird. Des Weiteren wird die der Optimierung zugrunde gelegte Zielgröße über die quadratische Summe der Abweichungen der simulierten Drehmoment- und Drehzahlverläufe von gewünschten idealen Verläufen definiert, wobei ein vergleichsweise komplexes Modell des Fahrzeugantriebsstranges zum Einsatz kommt. Die Optimierung des komplexen Modells erfordert ein aufwendiges globales Optimierungsverfahren. Es wird eine so genannte Rastersuche als Optimierungsverfahren eingesetzt, die nur für wenige Optimierungsparameter einsetzbar ist. Mit diesem Ansatz ist eine Online-Optimierung im Bereich eines Steuergerätes nicht durchführbar, da die Optimierung zum einen aufgrund des aufwendigen Optimierungsverfahrens und zum anderen durch das zugrunde Legen eines komplexen und komponentenweise aufgebauten Modells nicht innerhalb der dafür erforderlichen Betriebszeiten durchführbar ist.

Der vorliegenden Erfindung liegt daher die Aufgabe zugrunde, ein Verfahren zur Verfügung zu stellen, mittels welchem ein Schaltablauf eines Übersetzungswechsels einer Getriebeeinrichtung eines Fahrzeugantriebsstranges mit geringem Aufwand und unter Berücksichtigung einer geringen Anzahl an Betriebsparametern bestimmbar ist.

Erfindungsgemäß wird diese Aufgabe mit einem Verfahren mit den Merkmalen des Patentanspruches 1 gelöst.

Bei dem erfindungsgemäßen Verfahren zum Bestimmen eines Schaltablaufes eines Übersetzungswechsels einer Getriebeeinrichtung eines Fahrzeugantriebsstranges mit einer getriebeeingangsseitig mit der Getriebeeinrichtung verbundenen Antriebsmaschine und einem getriebeausgangsseitig mit der Getriebeeinrichtung wirkverbundenen Abtrieb ausgehend von einer in der Getriebeeinrichtung eingelegten Ist-Übersetzung in Richtung einer in der Getriebeeinrichtung einzulegenden Ziel-Übersetzung ist zur Durchführung des Übersetzungswechsels wenigstens ein Schaltelement aus einem Kraftfluss des Fahrzeugantriebsstranges abzuschalten und wenigstens ein weiteres Schaltelement in den Kraftfluss zuzuschalten.

Erfindungsgemäß wird der Schaltablauf in Abhängigkeit eines bei in der Getriebeeinrichtung eingelegter Ist-Übersetzung vorliegenden Betriebszustandes des Fahrzeugantriebsstranges bestimmt, wobei der Betriebszustand durch verschiedene Betriebszustandsgrößen des Fahrzeugantriebsstranges charakterisiert ist, die Eingangsgrößen eines den Fahrzeugantriebsstrang abbildenden Modells darstellen. Ausgangsgrößen des Modells, wenigstens eine den Schaltablauf charakterisierende und applikativ bestimmte Zielvorgabe ih Form eines funktionalen Zusammenhangs und Grenzwerte von Betriebszustandsgrößen oder von Kombinationen von Betriebszustandsgrößen werden einer Optimierungsroutine als Eingangsgrößen zugeführt, in deren Bereich eine Minimierung des funktionalen Zusammenhangs der wenigstens einen Zielvorgabe durchgeführt wird und zusätzlich den Schaltablauf darstellende Drehmomentverläufe von Einrichtungen des Fahrzeugantriebsstranges in Abhängigkeit des Minimums des funktionalen Zusammenhangs der wenigstens einen Zielvorgabe unter Berücksichtigung der Grenzwerte der Betriebszustandsgrößen bestimmt werden, in deren Bereich während des Übersetzungswechsels jeweils ein Drehmoment in den Fahrzeugantriebsstrang eingeleitet und/oder ein im Fahrzeugantriebsstrang geführtes Drehmoment verändert wird.

Das erfindungsgemäße Verfahren nutzt ein den Fahrzeugantriebsstrang abbildendes Modell, um aus den über die Optimierungsroutine bestimmten Drehmomentverläufen der Einrichtungen des Fahrzeugantriebsstranges, in deren Bereich während des Übersetzungswechsels jeweils ein Drehmoment in den Fahrzeugantriebsstrang eingeleitet und/oder ein im Fahrzeugantriebsstrang geführtes Drehmoment verändert wird, resultierende optimale Drehzahlen und Drehbeschleunigungen von Wellen des Fahrzeugantriebsstranges für die durchzuführende Schaltung bzw. für den durchzuführenden Übersetzungswechsel in der Getriebeeinrichtung zu bestimmen. Dadurch, dass wenigstens eine Zielvorgabe in Form eines funktionalen Zusammenhangs und Grenzwerte von Betriebszustandsgrößen als Eingangsgrößen anstelle von den Schaltablauf charakterisierenden Drehmomentverläufen als Eingangsgrößen der Optimierungsroutine zugeführt werden, findet eine Invertierung des Auslegungsproblems statt. Die wenigstens eine Zielvorgabe und die Grenzwerte der Betriebszustandsgrößen sind weitgehend unabhängig von verschiedenen Fahrsituationen, womit die Auslegung stark vereinfacht und beschleunigt wird, da die Optimierung auf Basis einer geringen Anzahl verschiedener Applikationsparameter durchführbar ist.

Beim erfindungsgemäßen Verfahren wird die Minimierung der wenigstens einen Zielvorgabe iterativ durchgeführt und die Verläufe der Drehmomente über die Optimierungsroutine iterativ ermittelt, womit der Schaltablauf eines Übersetzungswechsels in einer Getriebeeinrichtung im Vergleich zu aus dem Stand der Technik bekannten Verfahren sowohl mit geringerer Rechenleistung als auch innerhalb kürzerer Rechenzeiten ermittelbar ist.

Ein Schaltablauf eines Übersetzungswechsels einer Getriebeeinrichtung ist auch dann online bestimmbar, wenn die Optimierungsroutine ein lokal konvergierendes Optimierungsverfahren, vorzugsweise ein ableitungsbehaftetes Optimierungsverfahren, umfasst, mittels dem die Optimierung innerhalb kurzer Betriebszeiten durchführbar ist.

Bei weiteren vorteilhaften Varianten des erfindungsgemäßen Verfahrens umfasst die Optimierungsroutine ein schnelles, lokal konvergierendes Verfahren zur Lösung beschränkter Optimierungsprobleme, vorzugsweise ein Simplex-Verfahren oder ein Innere-Punkte-Verfahren zur Lösung linearer Optimierungsprobleme, ein Verfahren der quadratischen Optimierung zur Lösung quadratischer Optimierungsprobleme oder vorzugsweise ein so genanntes SQP-Verfahren (SequentialQuadratic-Programming) oder ein Innere-Punkte-Verfahren zur Lösung beschränkter nichtlinearer Optimierungsprobleme, um innerhalb weniger Rechenschritte den Schaltablauf eines Übersetzungswechsels in einer Getriebeeinrichtung bestimmen zu können.

Mit den vorgenannten Optimierungsverfahren ist ein Schaltablauf eines Übersetzungswechsels in einer Getriebeeinrichtung jeweils aktuell im Betrieb eines Fahrzeuges online bestimmbar, da für die Durchführung der Optimierungsroutine dann nur geringe Rechenleistungen und geringe Rechenzeiten erforderlich sind.

Wird die Berechnung des Optimierungsproblems und damit die Bestimmung des Schaltablaufes eines Übersetzungswechsels einer Getriebeeinrichtung offline durchgeführt, können auch heuristische Verfahren, wie simulated-annealing, stochastische Suchverfahren, genetische Verfahren, evolutionäre Algorithmen oder deterministische Ansätze, wie Rasterungs- oder Unterteilungstechniken verwendet werden.

Wird der Schaltablauf in verschiedene Schaltablaufphasen unterteilt, wobei die einzelnen Schaltablaufphasen wenigstens eine Übergangsphase, während welcher das zur Durchführung des angeforderten Übersetzungswechsels abzuschaltende Schaltelement aus einem geschlossenen Betriebszustand in einen Schlupfbetrieb überführt wird oder das zur Durchführung des angeforderten Übersetzungswechsel zuzuschaltende Schaltelement unter Einhaltung eines stetigen Verlaufes einer Differenzdrehzahlbeschleunigung in einen geschlossenen Betriebszustand überführt wird, und wenigstens eine Gleitphase darstellen, während welcher jeweils eine Differenzdrehzahl im Bereich des zur Durchführung des angeforderten Übersetzungswechsels zuzuschaltenden Schaltelementes reduziert wird, sind Phasenzeiten der Schaltablaufphasen, vorzugsweise der Gleitphase, über die Optimierungsroutine variierbar.

Wird der Schaltablauf über die Optimierungsroutine sequentiell für jede Schaltablaufphase ermittelt, ist die Optimierungsroutine mit nur geringe Rechnerleistungen erfordernden linearen Optimierungsverfahren durchführbar.

Wird im Gegensatz dazu der Schaltablauf über die Optimierungsroutine unter gleichzeitiger Berücksichtigung aller Schaltablaufphasen global über alle Phasen hinweg bestimmt, ist die Optimierungsroutine vorzugsweise mittels eines Verfahrens der nicht linearen beschränkten Optimierung auszuführen, die im Vergleich zu linearen Optimierungsverfahren höhere Rechnerleistungen erfordern, jedoch im Vergleich zu aus dem Stand der Technik bekannten Lösungen innerhalb kürzerer Rechenzeiten in Verbindung mit der erfindungsgemäßen Vorgehensweise bessere Ergebnisse liefern.

Bei einer weiteren vorteilhaften Variante des erfindungsgemäßen Verfahrens werden über das den Fahrzeugantriebsstrang abbildende Modell alle Massenträgheiten des Fahrzeugantriebsstranges, vorzugsweise die Massenträgheit eines Fahrzeugaufbaus eines mit dem Fahrzeugantriebsstrang ausgeführten Fahrzeuges und auch die Antriebträgheit und die Trägheit einer Zwischenwelle, und zumindest Übersetzungen im Bereich der Getriebeeinrichtungen sowie Drehbeschleunigungen von Wellen des Fahrzeugantriebsstranges, insbesondere von Wellen im Bereich der Getriebeeinrichtung, sowie im Fahrzeugantriebsstrang wirkende Drehmomente berücksichtigt, um das reale Fahrzeugsystem mit hoher Genauigkeit abbilden zu können und einen Schaltablauf eines Übersetzungswechsels in einer Getriebeeinrichtung eines Fahrzeugantriebsstranges zur Erzielung eines für einen Fahrer nachvollziehbaren Fahrverhaltens eines Fahrzeuges mit möglichst geringem Aufwand und mit der dafür erforderlichen Genauigkeit ermitteln zu können.

Werden mehrere Zielvorgaben in Form eines zu minimierenden oder zu maximierenden funktionalen Zusammenhangs und die Grenzwerte der Betriebszustandsgrößen in Form von Ungleichungen der Optimierungsroutine zugeführt, ist die Lösung des Optimierungsproblems mit Hilfe bekannter Verfahren mit geringem Aufwand und innerhalb kurzer Rechenzeiten durchführbar.

Bei einer wiederum weiteren vorteilhaften Variante des erfindungsgemäßen Verfahrens werden der Optimierungsroutine mehrere Zielvorgaben als Eingangsgrößen zugeführt und der Schaltablauf wird in Abhängigkeit einer Mehrzieloptimierung erstellt, wobei zwischen den Zielvorgaben ein gezielter Kompromiss einstellbar ist. Damit ist eine Applikation einer Schaltung weitgehend situationsunabhängig durchführbar, da der gleiche Parametersatz für alle bzw. viele verschiedene Betriebssituationen eines Fahrzeugantriebsstranges verwendet werden kann.

Durch die Formulierung eines beschränkten Mehrzieloptimierungsproblems, das mehrere konkurrierende Zielvorgaben und auch verschiedene Randbedingungen bzw. Grenzwerte von Betriebszustandsgrößen berücksichtigt, ist ein einfaches Einstellen eines Kompromisses zwischen Fahrkomfort, Bauteilbelastungen und der jeweils vorliegenden Schaltzeit möglich. Dabei sind durch das Einstellen von Randbedingungen maximale oder minimale Werte für bestimmte Größen, wie beispielsweise die Schaltzeiten oder die Kupplungsbelastungen oder Komfortmaße, wie die Änderung der Abtriebsbeschleunigung, einhaltbar. Zusätzlich sind auch physikalische Grenzen über Ungleichheitsbedingungen berücksichtigbar, womit beispielsweise die Vorgabe positiver Betätigungsdrücke für die Betätigung der an den Übersetzungswechseln beteiligten Schaltelemente garantiert ist. Hieraus ergibt sich automatisch, welches der Schaltelemente, d. h. das zu öffnende oder das zu schließende Schaltelement, aktiv an einer Schaltung bzw. an dem Übersetzungswechsel beteiligt ist.

Wird der Schaltablauf in Abhängigkeit einer Bauteilbelastung und vorzugsweise weiterer Ziele während des Übersetzungswechsels, vorzugsweise in Abhängigkeit einer Belastung im Bereich der an dem Übersetzungswechsels beteiligten Schaltelemente bestimmt, ist der Schaltablauf beispielsweise durch Verschieben des Kompromisses zwischen der Bauteilbelastung und den weiteren Zielen derart ermittelbar, dass im Bereich der Schaltelemente eine Bauteilbelastung möglichst gering ist und die Schaltelemente eine hohe Lebensdauer aufweisen.

Bei weiteren vorteilhaften Varianten des erfindungsgemäßen Verfahrens wird der Schaltablauf in Abhängigkeit eines definierten Schaltzeitintervalls, innerhalb welcher der Übersetzungswechsel durchzuführen ist, und/oder in Abhängigkeit einer definierten maximal zulässigen Änderung eines im Bereich des Abtriebs anliegenden Drehmomentes bestimmt, womit die Ermittlung des Schaltablaufes ohne Veränderung der erfindungsgemäßen Vorgehensweise applikativ veränderbar ist.

Wird der Schaltablauf in Abhängigkeit von definierten maximal zulässigen Drehmomentwerten im Bereich des Fahrzeugantriebsstranges, vorzugsweise von im Bereich der an dem Übersetzungswechsel beteiligten Schaltelemente anliegenden Drehmomentwerten bestimmt, werden Überlastungen im Bereich des Fahrzeugantriebsstranges auf einfache Art und Weise durch den ermittelten Schaltablauf vermieden.

Eine angeforderte Schaltung ist mit hohem Schaltkomfort durchführbar, wenn der Schaltablauf in Abhängigkeit einer definierten maximal zulässigen Änderung eines im Bereich des Abtriebs anliegenden Drehmomentes und/oder in Abhängigkeit von definierten maximal zulässigen Drehzahlen und/oder Gradienten von Drehzahlverläufen im Bereich des Antriebsstranges, vorzugsweise von Drehzahlen und/oder Gradienten von Drehzahlverläufen von Wellen der Getriebeeinrichtung, bestimmt wird, wobei hierdurch auch unzulässig hohe Belastungen im Bereich der Schaltelemente, die zu einer dauerhaften Schädigung der Funktionsweise der Schaltelemente führen können, auf einfache Art und Weise vermeidbar sind.

Für einige der vorgenannten Aspekte ist eine Minimierung wünschenswert, wobei aber auch maximal zulässige Werte einzuhalten sind, wie beispielsweise Schaltzeiten oder Bauteilbelastungen. Die Aspekte sind daher sowohl als zu minimierende oder zu maximierende Zielvorgaben als auch als Randbedingung in Form maximal zulässiger Grenzen bei der Bestimmung des Schaltablaufes berücksichtigbar.

Zudem besteht die Möglichkeit, dass der Schaltablauf in Abhängigkeit eines zu minimierenden oder zu maximierenden Komfortmaßes während des Übersetzungswechsels, vorzugsweise in Abhängigkeit der innerhalb des Übersetzungswechsels auftretenden Änderung der Fahrzeugbeschleunigung bzw. einer Änderung der Abtriebsbeschleunigung bestimmt wird.

Sowohl die in den Patentansprüchen angegebenen Merkmale als auch die im nachfolgenden Ausführungsbeispiel des erfindungsgemäßen Gegenstandes angegebenen Merkmale sind jeweils für sich alleine oder in beliebiger Kombination miteinander geeignet, den erfindungsgemäßen Gegenstand weiterzubilden. Die jeweiligen Merkmalskombinationen stellen hinsichtlich der Weiterbildung des Gegenstandes nach der Erfindung keine Einschränkung dar, sondern weisen im Wesentlichen lediglich beispielhaften Charakter auf.

Weitere Vorteile und vorteilhafte Weiterbildungen der Erfindung ergeben sich aus den Patentansprüchen und dem unter Bezugnahme auf die Zeichnung prinzipmäßig beschriebenen Ausführungsbeispiel.

Es zeigt:

Fig. 1 ein stark vereinfachtes Blockschaltbild einer Variante der erfindungsgemäßen Vorgehensweise; und

Fig. 2 ein vereinfachtes 3-Massen-Modell eines Fahrzeugantriebsstranges mit einem zweiteiligen Getriebe, über das acht Gänge darstellbar sind.

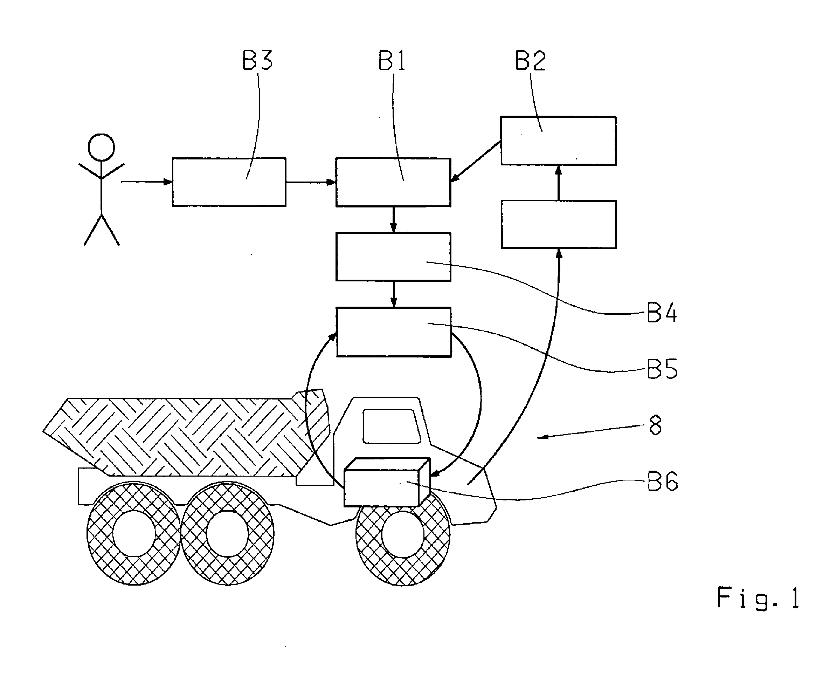

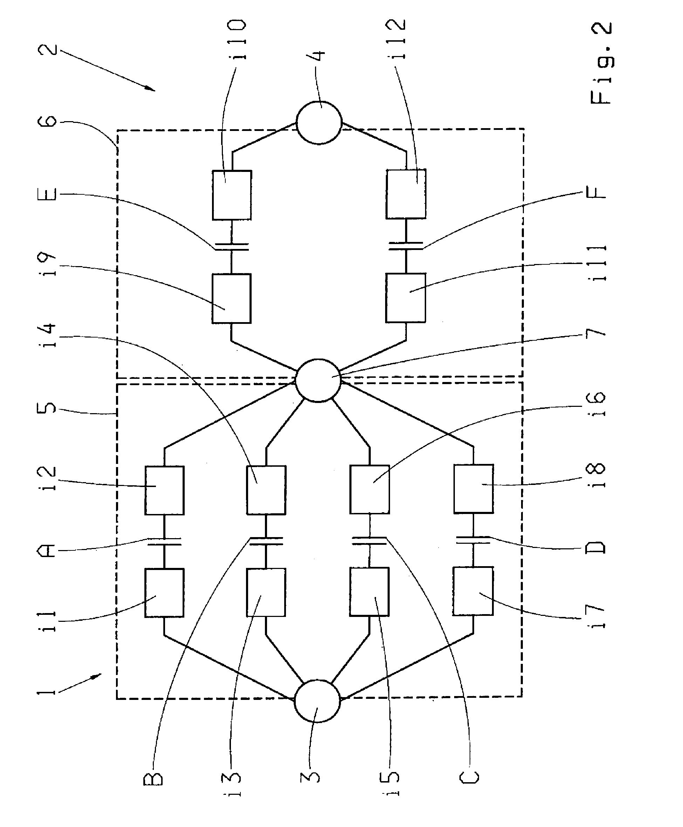

In Fig. 1 ist ein stark schematisiertes Blockschaltbild eines Verfahrens zum Bestimmen eines Schaltablaufes eines Übersetzungswechsels gezeigt, über welches Schaltabläufe einer in Fig. 2 ebenfalls stark vereinfacht dargestellten Getriebeeinrichtung 1 eines Fahrzeugantriebsstranges 2 mit einer getriebeeingangsseitig mit der Getriebeeinrichtung verbundenen Antriebsmaschine 3 und einem getriebeausgangsseitig mit der Getriebeeinrichtung 2 wirkverbundenen Abtrieb 4 ausgehend von einer in der Getriebeeinrichtung 1 eingelegten Ist-Übersetzung in Richtung einer in der Getriebeeinrichtung 1 einzulegenden Zielübersetzung ermittelbar sind.

Das Verfahren wird vorliegend anhand der Getriebeeinrichtung 1 beschrieben, das aus zwei seriell angeordneten Schaltgetrieben 5, 6 besteht. Das Schaltgetriebe 5 stellt vorliegend einen Splitter dar, in dessen Bereich kleine Übersetzungssprünge realisiert werden, während das Schaltgetriebe 6 eine Gruppe oder ein Hauptgetriebe darstellt in dessen Bereich große Übersetzungssprünge darstellbar sind. Mittels der Kombination der beiden Schaltgetriebe 5 und 6 sind über die Getriebeeinrichtung 1 vorliegend acht Übersetzungen für Vorwärtsfahrt realisierbar, wobei sowohl der Splitter 5 als auch die Gruppe 6 als automatische Lastschaltgetriebe aufgebaut sind.

Die Übersetzungswechsel werden entweder über einfache Lastschaltungen, während welchen nur im Bereich des Splitters 5 ein Übersetzungswechsel stattfindet, oder über so genannte Gruppen-Wechsel-Lastschaltungen, während welchen sowohl im Bereich des Splitters 5 als auch im Bereich der Gruppe 6 ein Übersetzungswechsel stattfindet, durchgeführt. Während Gruppen-Wechsel-Lastschaltungen laufen die beiden Lastschaltungen im Bereich des Splitters 5 und der Gruppe 6 zeitgleich ab und werden entsprechend koordiniert, um die Getriebeübersetzung von einer aktuell in der Getriebeeinrichtung 1 eingelegten Ist-Übersetzung in Richtung einer einzulegenden Ziel-Übersetzung in gefordertem Umfang zu überführen. Innerhalb der Getriebeeinrichtung 1 ist während einer Gruppen-Wechsel-Lastschaltung ein großer Übersetzungssprung zu überwinden, aus dem eine große Drehzahländerung im Bereich einer den Splitter 5 und die Gruppe 6 miteinander verbindenden Zentralwelle 7 resultiert. Die große Drehzahländerung im Bereich der Zentralwelle 7 kann während ungünstiger Betriebszustandsverläufe des Fahrzeugantriebsstranges 2 zu einer signifikanten Beeinflussung einer Drehzahl im Bereich des Abtriebs 4 und infolgedessen zu einer erhöhten Bauteilbelastung sowie zu Komforteinbußen führen.

Mit dem nachfolgend näher beschriebenen Verfahren zum Bestimmen eines Schaltablaufes eines Übersetzungswechsels in der Getriebeeinrichtung 1 besteht auf einfache Art und Weise die Möglichkeit, Übersetzungswechsel anhand eines vorbestimmten Schaltablaufes derart durchzuführen, dass aus dem Übersetzungswechsel resultierende Bauteilbelastungen und Komforteinbußen möglichst gering sind.

Das nachfolgend näher beschriebene Verfahren ist jedoch auch dazu geeignet, Schaltabläufe für Übersetzungswechsel in beliebig ausgeführten Getriebeeinrichtungen, wie herkömmliche Automatgetriebe in Vorgelegebauweise oder in Planetengetriebebauweise, zu bestimmen und angeforderte Schaltungen in gewünschtem Umfang mittels der ermittelten Schaltabläufe durchführen zu können.

Zur Durchführung eines Übersetzungswechsels in der Getriebeeinrichtung 1 ist jeweils wenigstens ein Schaltelement A bis D des Splitters 5 aus einem Kraftfluss des Fahrzeugantriebsstranges 2 abzuschalten und ein weiteres Schaltelement A bis D in den Kraftfluss des Fahrzeugantriebsstranges 2 zuzuschalten, wenn der angeforderte Übersetzungswechsel über eine einfache Lastschaltung realisierbar ist. Ist zur Durchführung des angeforderten Übersetzungswechsels jedoch eine Gruppen-Wechsel-Lastschaltung in der Getriebeeinrichtung 1 erforderlich, ist sowohl im Bereich des Splitters 5 eines der Schaltelemente A bis D abzuschalten und ein weiteres Schaltelement A bis D zuzuschalten und gleichzeitig ein Schaltelement E oder F im Bereich der Gruppe 6 abzuschalten und das jeweils andere Schaltelement F oder E zuzuschalten.

Die in Fig. 2 gezeigte Darstellung entspricht einer modellhaften Abbildung des Fahrzeugantriebsstranges 2 eines einfachen formalisierten Antriebsstrangmodells, welches Trägheiten, Übersetzungsverhältnisse i1 bis i12 und physikalische Randbedingungen beschreibt, um somit für die Einhaltung physikalischer Gesetzte zu sorgen. Die physikalischen Randbedingungen werden neben den Schaltablauf charakterisierenden und applikativ bestimmten Zielvorgaben in Form eines funktionalen Zusammenhangs als Eingangsgrößen einer Optimierungsroutine B1 zugeführt. Zusätzlich werden neben den situationsunabhängigen, zeitinvarianten Größen, d. h. den Trägheiten der Antriebsmaschine 3, verschiedener Wellen des Fahrzeugantriebsstranges 1 und eines Fahrzeugaufbaus eines mit dem Fahrzeugantriebsstrang 2 ausgeführten Fahrzeuges 8 auch situationsabhängige, zeitveränderliche Größen, wie Drehbeschleunigungen der Wellen des Fahrzeugantriebsstranges 2 sowie Stellmomente und Widerstandsmomente von einem den Fahrzeugantriebsstrang 2 abbildenden Modell B2 zugeführt. Die vom Modell B2 ausgegebenen und Eingangsgrößen der Optimierungsroutine B1 darstellenden Ausgangsgrößen werden in Abhängigkeit eines bei in der Getriebeeinrichtung 1 eingelegter Ist-Übersetzung vorliegenden Betriebszustandes des Fahrzeugantriebsstranges 2 bestimmt.

Im Bereich der Optimierungsroutine B.1 wird in Abhängigkeit der Ausgangsgrößen des Modells B2 und der von einem Funktionsblock B3 gelieferten Zielvorgaben und Randbedingungen bzw. Grenzwerten von Betriebszustandsgrößen des Fahrzeugantriebsstranges 2 ein Schaltablauf für eine angeforderte Schaltung bestimmt, wobei aus dem im Bereich der Optimierungsroutine B1 ermittelten Schaltablauf jeweils optimale Bewegungen der Wellen des Fahrzeugantriebsstranges 2 und die hierfür notwendigen Drehmomentverläufe von Einrichtungen des Fahrzeugantriebsstranges 2, in deren Bereich während des Übersetzungswechsels in der Getriebeeinrichtung 1 jeweils ein Drehmoment in den Fahrzeugantriebsstrang 2 eingeleitet und/oder ein im Fahrzeugantriebsstrang 2 geführtes Drehmoment verändert wird.

Dabei entspricht die Antriebsmaschine 3 vorliegend einer Einrichtung des Fahrzeugantriebsstranges 2 in deren Bereich während des Übersetzungswechsels jeweils ein Drehmoment in Form eines Antriebsmoments während eines Zugbetriebes des Fahrzeugantriebsstranges 2 oder ein Bremsmoment bzw. ein Schubmoment während eines Schubbetriebes des Fahrzeugantriebsstranges 2 eingeleitet wird. Die Schaltelemente A bis F, die als reibschlüssige Kupplungen, Bremsen oder auch Synchronisierungen ausgeführt sein können, entsprechen wiederum Einrichtungen des Fahrzeugantriebsstranges 2 in deren Bereich während des Übersetzungswechsels jeweils ein im Fahrzeugantriebsstrang geführtes Drehmoment verändert wird, wenn diese am jeweilig durchzuführenden Übersetzungswechsel beteiligt sind.

In Abhängigkeit des jeweils vorliegenden Anwendungsfalles kann ein Fahrzeugantriebsstrang auch weitere Einrichtungen, wie einen hydrodynamischen Drehmomentwandler, einen Retarder, Bremsen, Motoren oder Generatoren und dergleichen aufweisen, die dann ebenfalls drehmomenterzeugende oder drehmomentverändernde Einrichtungen eines Fahrzeugantriebsstranges darstellen und die während der Bestimmung des Schaltablaufes in Abhängigkeit des jeweils vorliegenden Betriebszustandes des Fahrzeugantriebsstranges bei eingelegter Ist-Übersetzung berücksichtigt werden und deren Verhalten während der Durchführung des angeforderten Übersetzungswechsels durch den Schaltablauf in gewünschtem Umfang zur Umsetzung der Zielvorgaben und Randbedingungen durch eine entsprechende Steuerung und/oder Regelung veränderbar ist.

Während der Durchführung des Verfahrens, das das einfache Fahrzeugantriebsstrangmodell B2 nutzt, um eine optimale Bewegung, d. h. optimale Drehzahlen und Drehbeschleunigungen der am Übersetzungswechsel beteiligten Wellen des Fahrzeugantriebsstranges vorauszuberechnen, werden Drehzahl- und Drehmomentverläufe vorausberechnet, die den Schaltablauf darstellen. Die Drehzahl- und Drehmomentverläufe werden an einen Funktionsblock B4 ausgegeben und über einen regelungstechnischen Ansatz auf die vorhandenen Einrichtungen des Fahrzeugantriebsstranges 2, d. h. die Antriebsmaschine 3 und die Schaltelemente A bis F, aufgeschaltet, um den angeforderten Übersetzungswechsel in Abhängigkeit des bestimmten Schaltablaufes umzusetzen. Hierfür können sämtliche in einem Fahrzeugantriebsstrang vorhandene Stellglieder, wie Kupplungen, Motoren oder Generatoren, ein Wandler, ein Retarder, Bremsen und dergleichen dem optimierten Schaltablauf entsprechend betätigt werden.

Der Schaltablauf wird vorliegend in verschiedene Schaltablaufphasen unterteilt, wobei dies nicht zwingend erforderlich ist. Die einzelnen Schaltablaufphasen stellen jeweils wenigstens eine Übergangsphase, während welcher das zur Durchführung des angeforderten Übersetzungswechsels abzuschaltende Schaltelement A bis D oder E bzw. F aus einem geschlossenen Betriebszustand in einen Schlupfbetrieb überführt wird oder das zur Durchführung des angeforderten Übersetzungswechsels zuzuschaltende Schaltelement A bis D oder E bzw. F unter Einhaltung eines stetigen Verlaufes einer Differenzdrehzahlbeschleunigung in einen geschlossenen Betriebszustand überführt wird, und wenigstens eine Gleitphase dar, während welcher eine Differenzdrehzahl im Bereich des zur Durchführung des angeforderten Übersetzungswechsels zuzuschaltenden Schaltelementes A bis D oder E bzw. F reduziert wird.

Die Bestimmung des Schaltablaufes bzw. die Optimierung im Bereich der Optimierungsroutine B1 erfolgt auf Basis des reduzierten Modells B2, welches in Form eines Gleichungssystems vorliegt. Die über das Verfahren bestimmten Soll-Bewegungsverläufe bzw. die erforderlichen Ansteuerdrehmomente der Einrichtungen des Fahrzeugantriebsstranges 2 ergeben sich aus der Fahrsituation und der Definition der Zielvorgaben bzw. von Schaltzielen. Auf Basis dieser applikativ vorgegebenen Schaltziele, wie beispielsweise einer geringen Belastung der am Übersetzungswechsel beteiligten Schaltelemente A bis F, keine oder nur eine geringe Änderung einer Drehzahl im Bereich des Abtriebs 4 oder eine kurze Schaltzeit, werden die bezüglich dieser derart formulierten Schaltziele optimalen Verläufe der Drehmomente der Einrichtungen des Fahrzeugantriebsstranges 2 und die daraus resultierenden Drehzahlen der durch den angeforderten Übersetzungswechsel betroffenen Wellen des Fahrzeugantriebsstranges mithilfe eines numerischen Optimierungsverfahrens berechnet und anschließend an eine im Bereich eines Funktionsblockes B6 vorgesehene Getrieberegelung übermittelt. Zur Bestimmung des Schaltablaufes werden Bewegungsgleichungen mit der Drehbeschleunigung $\dot{\omega}$ der Wellen und den jeweils angreifenden Drehmomenten M als lineares Gleichungssystem der Form

$$\Theta \cdot \dot{\omega} = K \cdot M$$

angegeben. Die Massenmatrix $\Theta$ enthält die Trägheitsmomente der Wellen, die Matrix K die Übersetzungsverhältnisse zwischen den Aktoren und den Wellen. Differenzbeschleunigungen im Bereich der Schaltelemente A bis F werden über die Beziehung

$$\Delta \dot{\omega} = D \cdot \dot{\omega}$$

bestimmt.

Dieses Modell erlaubt eine abschnittweise definierte, explizite Lösung der Bewegungsgleichung, womit iterative Integrationsverfahren vermeidbar sind.

Eine geschlossene Kupplung i ist jeweils über eine nachfolgend aufgeführte Gleichheitsnebenbedingung, die eine Zwangsbedingung darstellt, abbildbar.

$$\Delta \dot{\omega}_i = D_i \cdot \dot{\omega} = 0$$

Dabei kann das resultierende Moment $M_i$ positive und negative Werte annehmen.

Die physikalischen Randbedingungen werden über Ungleichheitsnebenbedingungen vorgegeben. Eine physikalische Randbedingung stellt die Begrenzung des jeweils von der Antriebsmaschine 3 zur Verfügung gestellten Drehmomentes dar, das kleiner oder gleich einem maximalen Drehmomentwert und größer oder gleich einem minimalen Drehmomentwert vorgegeben wird. Zusätzlich werden die im Bereich der Schaltelemente A bis F während des Schaltablaufes einzustellenden Betätigungsdrücke immer als positiv definiert.

Das Optimierungsproblem wird als lineares Optimierungsproblem formuliert, wobei im aktuellen Ansatz, dem eine Gruppen-Wechsel-Lastschaltung in der Getriebeeinrichtung 1 zugrunde liegt, zwei Gleitphasen berücksichtigt werden. Während der ersten Gleitphase wird die Drehzahldifferenz des zu schließenden Schaltelementes A bis D komplett abgebaut. In der zweiten Gleitphase wird die Drehzahldifferenz des zu schließenden Schaltelementes E oder F der Gruppe 6 reduziert. Der ersten Gleitphase ist vorliegend zeitlich eine Übergangsphase vorgeschaltet, während der die jeweils zu öffnenden Schaltelemente A bis D und E oder F in einen Schlupfbetrieb überführt werden. Zwischen den beiden Gleitphasen ist eine weitere Übergangsphase vorgesehen, während der das im Bereich des Splitters 5 zu schließende Schaltelement A bis D glatt, d. h. mit einem stetigen Verlauf der Differenzdrehzahlbeschleunigungen, geschlossen wird. An die zweite Gleitphase schließt sich eine weitere Übergangsphase als fünfte Schaltablaufphase an, während der das im Bereich der Gruppe 6 zu schließende Schaltelement E oder F glatt geschlossen wird.

Allgemein besitzt ein lineares Optimierungsproblem die Form eines Skalarproduktes aus einer transponierten Matrix $c^T$ und einem Vektor x:

$$\min c^T \cdot x$$

unter Berücksichtigung der Nebenbedingungen $A_{eq} \cdot x = b_{eq}$ und $A_{le} \cdot x \leq b_{le}$

Im vorliegenden Problem bilden die Stellmomente der Einrichtungen des Fahrzeugantriebsstranges 2 und die Drehbeschleunigungen der vom angeforderten Übersetzungswechsel betroffenen Wellen des Fahrzeugantriebsstranges 2 den Vektor x der Optimierungsparameter:

$$x = \begin{bmatrix} \dot{\omega} \\ M_{Stell} \end{bmatrix}$$

Die Bewegungsgleichung und eventuell vorhandene Zwangsbedingungen fließen direkt in die Gleichheitsnebenbedingungen, beispielsweise mit einer Zwangsbedingung, ein:

$$x = \begin{bmatrix} \Theta & -K_{Stell} \\ D_i & 0 \end{bmatrix}, \quad b_{eq} = \begin{bmatrix} K_{ext} \cdot M_{ext} \\ 0 \end{bmatrix}$$

Neben dem Optimierungsproblem löst das Optimierungsverfahren gleichzeitig die Bewegungsgleichung, womit die spezielle Struktur des den Fahrzeugantriebsstrang 2 abbildenden Modells während der Optimierung ausgenutzt wird. Über die Ungleichheitsnebenbedingungen lassen sich physikalische Randbedingungen und funktionale Aspekte berücksichtigen.

Die Bestimmung des Schaltablaufs ist als Mehrziel-Optimierungsproblem formuliert. Dabei sind die unterschiedlichen Zielvorgaben bzw. Schaltziele über Parameter gegeneinander gewichtbar, priorisierbar bzw. ausbalancierbar. Die Applikation erfolgt über diese Zielgewichtungen sowie über harte Randbedingungen, womit die Vorstellung eines Applikateurs über einen idealen Schaltablauf in das Optimierungsproblem übertragbar ist. Anstelle die Druck- bzw. Drehmomentverläufe vorzugeben, werden bei dem vorliegenden Verfahren Zielvorgaben und Randbedingungen definiert, womit eine Invertierung des Auslegungsproblems stattfindet. Die Zielvorgaben und Randbedingungen gelten weitgehend unabhängig von den verschiedenen Fahrsituationen. Daraus ergibt sich eine geringe Anzahl an Applikationsparametern, wodurch die Auslegung stark vereinfacht und beschleunigt wird.

Das Mehrziel-Optimierungsproblem ist vorliegend als so genanntes Min-Max-Problem formuliert:

$$\min_x \left\{ \max_j \frac{g_j^T \cdot x - p_j}{w_j} \right\}$$

Dieses lässt sich durch einige Umformungen auf die oben dargestellte Form bringen. Es können so mehrere Zielkriterien bzw. Zielvorgaben $g_j^T \cdot x$ berücksichtigt werden. Durch den Zielpunkt $p_j$ und die Gewichtung $w_j$ können die verschiedenen Kriterien miteinander verglichen werden. Aufgabe der Min-Max-Optimierung ist es, das/die am schlechtesten erfüllten Kriterien bzw. Zielvorgaben zu minimieren. Die Größen $p_j$ und $w_j$ dienen, neben den Randbedingungen, der Applikation des Verfahrens.

Generell sind mittels des erfindungsgemäßen Verfahrens über generierte Sollwerte die gewünschten Bewegungen der Wellen der Getriebeeinrichtung 1 und des Fahrzeugantriebsstranges 2 anhand des Drehzahl- und Drehbeschleunigungsverlaufs der einzelnen Wellen beschreibbar. Die Sollwerte sind auf Basis eines mechanischen Starrkörpermodells berechenbar. Das Starrkörpermodell beschreibt dann die Dynamik des Fahrzeugantriebsstranges 2 bestehend aus der Antriebsmaschine 3, der Getriebeeinrichtung 1 und dem Abtrieb 4 inklusive der Fahrzeugmasse. Eine in der Zeichnung nicht näher dargestellte Wandlerkupplung des Fahrzeugantriebsstranges 2 ist dabei als geschlossen annehmbar, weshalb die Antriebsmaschine 3 und der Getriebeeingang der Getriebeeinrichtung 1 als eine starre Masse gemeinsam betrachtet werden können.

Bestehende Freiheitsgrade bei der Bewegung der Wellen von der Ist-Übersetzung in Richtung der Ziel-Übersetzung sind mit Hilfe mathematischer Optimierungsverfahren ausnutzbar, um optimale Sollwertverläufe berechnen zu können. Diese Freiheitsgrade sind die variabel einstellbaren Schließzeiten des Splitters 5 und der Gruppe 6 sowie die tolerierte Änderung einer Beschleunigung des Abtriebs 4. Als Optimierungsverfahren können Verfahren der linearen Optimierung, wie beispielsweise Simplexverfahren oder Innere-Punkte-Verfahren für lineare Probleme, oder Verfahren der beschränkten nicht linearen Optimierung, z. B. Verfahren der quadratischen Optimierung, SQP-Verfahren oder Innere-Punkte-Vefahren für nicht lineare Probleme zum Einsatz kommen. Bei einer Offline-Berechnung des Optimierungsproblems bzw. bei einer Offline-Bestimmung des Schaltablaufes eines Übersetzungswechsels in der Getriebeeinrichtung 1 sind auch heuristische Verfahren, wie simulated-annealing, stochastische Suchverfahren, genetische Verfahren, evolutionäre Algorithmen oder deterministische Ansätze wie Rasterungs- oder Unterteilungstechniken verwendbar.

Bei der Berechnung der Sollwerte kann eine Beeinflussung weiterer Momentsteller bzw. Einrichtungen des Fahrzeugantriebsstranges, wie der Antriebsmaschine 3 oder eines zusätzlich vorgesehenen Retarders, berücksichtigt werden. Die Ansteuerung der Antriebsmaschine 3 kann dabei sowohl über Drehmomentvorgaben als auch über Drehzahlvorgaben realisiert werden, da beide Größen bei der Berechnung anfallen.

Soll die Bestimmung des Schaltablaufes und die dafür vorgesehene Optimierung in Echtzeit auf einem Steuergerät zur Ansteuerung der Getriebeeinrichtung 1 erfolgen, sind lokal konvertierende Optimierungsverfahren bevorzugt. Eine Applikation von Lastschaltungen erfolgt über die Gewichtung von Zielvorgaben und Vorgabe von Randbedingungen. Dabei können Zielvorgaben, wie die Änderungen im Bereich des Abtriebs 4, Bauteilbelastungen, Schaltzeiten und weitere physikalische oder technische Randbedingungen berücksichtigt werden.

Generell werden verschiedene Ziele und Anforderungen an das Verfahren gestellt. So sollen beispielsweise unzulässige Einschränkungen bei der Berechnung der der im Bereich der an der Durchführung des angeforderten Übersetzungswechsels beteiligten Schaltelemente A bis F einzustellenden Gleitmomente vermieden werden. Des Weiteren soll die Bestimmung des Schaltablaufes im Echtzeitbereich eines Steuergerätes oder eine Berechnung offline an einem Applikations-PC möglich sein. Des Weiteren soll die Applikation der Schaltung möglichst einfach realisiert werden. Idealerweise wird das Verfahren nur mit wenigen Parametern situationsunabhängig eingestellt. Zusätzlich kann eine Verbesserung der Schaltung durch eine Beeinflussung des Drehmomentes der Antriebsmaschine 3 erfolgen.

Aufgrund der Verknüpfung des abstrakten, formalisierten Modells B2 mit schnellen, lokal konvergierenden Optimierungsverfahren ist eine Ausführung des Verfahrens in Echtzeit auf einem Steuergerät möglich. Wird der Schaltablauf offline auf einem Applikationslaptop zur schnellen Berechnung von Tabellen durchgeführt, ist eine Abstimmung direkt am Fahrzeug möglich.

Das vorgestellte Verfahren beruht auf einem modellbasierten Ansatz mit einer allgemeingültigen Vorgehensweise zur Berechnung von Sollwertverläufen. Dabei ist das Verfahren sowohl für einfache Lastschaltungen, für Gruppen-Wechsel-Lastschaltungen oder auch für noch komplexere Getriebetypen bestehend aus drei oder mehreren Getriebeteilen anwendbar, wobei je nach Schaltungs- und Getriebetyp mehrere Übergangs- und Gleitphasen oder jeweils nur eine Übergangs- und Gleitphase berücksichtigt werden müssen. Der Einsatz des Verfahrens erfordert keinerlei spezifische bauliche Modifikationen eines bereits bestehenden Getriebesystems, da es individuell an das jeweils betrachtete Getriebesystem und an den Aufbau eines Fahrzeugantriebsstranges mit geringem Aufwand anpassbar ist.

Des Weiteren arbeitet das Verfahren mit variablen Schaltzeiten, womit eine natürliche Bewegung des Systems optimal ausnutzbar ist und dem System keine unnatürliche Bewegung aufgezwungen wird. Während bestimmter Schaltungen, insbesondere während Zug-Hoch- oder Schub-Rück-Schaltungen, bewegt sich die Zentralwelle 7 allein aufgrund der Aufrechterhaltung des Zug- oder Schubmomentes im Bereich des Abtriebs 4 durch eine entsprechende Betätigung einer Kupplung E oder F der Gruppe 6 bereits in die gewünschte Richtung. Ein Übersetzungswechsel im Bereich des Splitters 5 ist daher ohne Eingriff des Splitters 5 durchführbar, wobei die Schaltzeit des Übersetzungswechsels im Bereich des Splitters 5 sich dabei aus der jeweiligen Betriebssituation ergibt.

Wird das Verfahren in der vorbeschriebenen Art und Weise auf Basis einer Mehrzieloptimierung durchgeführt, über die verschiedene und meist gegensätzliche Zielvorgaben gegeneinander ausbalanciert werden, ist beispielsweise ein Kompromiss bestehend aus einer Abtriebsänderung, aus während des Übersetzungswechsels auftretenden Bauteilbelastungen und maximalen Schaltzeiten abbildbar. Das Zusammenfassen der verschiedenen Zielvorgaben zu einem Zielfunktional kann mit Hilfe unterschiedlicher Methoden erfolgen. Bevorzugt wird hier die Goal-Attainment-Methode, die gelichbedeutend mit der Formulierung als Min-Max-Problem ist.

Die Applizierung der Schaltung wird über eine Gewichtung der verschiedenen Zielvorgaben vorgenommen. Auf Basis dieser Zielvorgaben werden die eigentlichen Ansteuergrößen bestimmt. Die Einstellparameter für die Applizierung sind im Wesentlichen die Gewichtungen der einzelnen Zielvorgaben. Es ergeben sich daher relativ wenige Einstellparameter. Bei aus dem Stand der Technik bekannten Verfahren werden direkt situationsabhängige Ansteuergrößen parametriert, um bestimmte Ziele zu erreichen. Dies erfordert eine wesentlich höhere Anzahl an Parametern, wodurch die Bestimmung der Schaltabläufe erheblich erschwert wird.

Die Optimierung kann dabei jeweils einzeln für die verschiedenen Schaltablaufphasen sequentiell erfolgen oder auch global über alle Schaltablaufphasen hinweg durchgeführt werden. Hierbei können die Phasenzeiten der Schaltablaufphasen, speziell der Gleitphasen, durch die Optimierung variiert werden.

**Bezugszeichen**

1            Getriebeeinrichtung
2            Fahrzeugantriebsstrang
3            Antriebsmaschine
4            Abtrieb
5            erstes Schaltgetriebe, Splitter
6            zweites Schaltgetriebe, Gruppe
7            Zentralwelle
8            Fahrzeug
B1 bis B6     Funktionsblock
A bis F        Schaltelement
i1 bis i12     Übersetzung

## Patentansprüche

1. Verfahren zum Bestimmen eines Schaltablaufes eines Übersetzungswechsels einer Getriebeeinrichtung (1) eines Fahrzeugantriebsstranges (2) mit einer getriebeeingangsseitig mit der Getriebeeinrichtung (1) verbundenen Antriebsmaschine (3) und einem getriebeausgangsseitig mit der Getriebeeinrichtung (1) wirkverbundenen Abtrieb (4) ausgehend von einer in der Getriebeeinrichtung (1) eingelegten Ist-Übersetzung in Richtung einer in der Getriebeeinrichtung (1) einzulegenden Ziel-Übersetzung, wobei zur Durchführung des Übersetzungswechsels wenigstens ein Schaltelement (A bis F) aus einem Kraftfluss des Fahrzeugantriebsstranges (2) abzuschalten und wenigstens ein weiteres Schaltelement (A bis F) in den Kraftfluss zuzuschalten ist, wobei der Schaltablauf in Abhängigkeit eines bei in der Getriebeeinrichtung (1) eingelegter Ist-Übersetzung vorliegenden Betriebszustandes des Fahrzeugantriebsstranges (2) bestimmt wird, wobei der Betriebszustand durch verschiedene Betriebszustandsgrößen des Fahrzeugantriebs-stranges (2) charakterisiert ist, die Eingangsgrößen eines den Fahrzeugantriebs-strang abbildenden Modells (B2) darstellen, und wobei Ausgangsgrößen des Modells (B2), wenigstens eine den Schaltablauf charakterisierende und applikativ bestimmte Zielvorgabe in Form eines funktionalen Zusammenhangs und Grenzwerte von Betriebszustandsgrößen oder von Kombinationen von Betriebszustandsgrößen als Eingangsgrößen einer Optimierungsroutine (B1) zugeführt werden, in deren Bereich eine Minimierung des funktionalen Zusammenhangs der wenigstens einen Zielvorgabe durchgeführt wird und zusätzlich den Schaltablauf darstellende Drehmomentverläufe von Einrichtungen (3, A bis F) des Fahrzeugantriebs-stranges (2) in Abhängigkeit des Minimums des funktionalen Zusammenhangs der wenigstens einen Zielvorgabe unter Berücksichtigung der Grenzwerte der Betriebszustandsgrößen bestimmt werden, in deren Bereich während des Übersetzungswechsels jeweils ein Drehmoment in den Fahrzeugantriebsstrang (2) eingeleitet und/oder ein im Fahrzeugantriebsstrang (2) geführtes Drehmoment verändert wird, **dadurch gekennzeichnet, dass** die Minimierung der wenigstens einen Zielvorgabe iterativ durchgeführt und die Verläufe der Drehmomente über die Optimierungsroutine iterativ ermittelt werden.

2. Verfahren nach Anspruch 1, **dadurch gekennzeichnet, dass** die Optimierungsroutine ein lokal konvergierendes Optimierungsverfahren umfasst.

3. Verfahren nach Anspruch 2, **dadurch gekennzeichnet, dass** die Optimierungsroutine ein ableitungsbehaftetes oder ein lineares Optimierungsverfahren umfasst.

4. Verfahren nach einem der Ansprüche 1 bis 3, **dadurch gekennzeichnet, dass** der Schaltablauf in verschiedene Schaltablaufphasen unterteilt wird, wobei die einzelnen Schaltablaufphasen jeweils wenigstens eine Übergangsphase, während welcher das zur Durchführung des angeforderten Übersetzungswechsels abzuschaltende Schaltelement (A bis F) aus einem geschlossenen Betriebszustand in einen Schlupfbetrieb überführt wird oder das zur Durchführung des angeforderten Übersetzungswechsels zuzuschaltende Schaltelement (A bis F) unter Einhaltung eines stetigen Verlaufes einer Differenzdrehzahlbeschleunigung in einen geschlossenen Betriebszustand überführt wird, und wenigstens eine Gleitphase darstellen, während welcher jeweils eine Differenzdrehzahl im Bereich des zur Durchführung des angeforderten Übersetzungswechsels zuzuschaltenden Schaltelementes (A bis F) reduziert wird.

5. Verfahren nach Anspruch 4, **dadurch gekennzeichnet, dass** der Schaltablauf über die Optimierungsroutine (B1) sequentiell für jede Schaltablaufphase ermittelt wird.

6. Verfahren nach Anspruch 4, **dadurch gekennzeichnet, dass** der Schaltablauf über die Optimierungsroutine (B1) unter gleichzeitiger Berücksichtigung aller Schaltablaufphasen bestimmt wird.

7. Verfahren nach einem der Ansprüche 1 bis 6, **dadurch gekennzeichnet, dass** über das den Fahrzeugantriebsstrang (2) abbildende Modell (B2) alle Massenträgheiten des Fahrzeugantriebsstranges (2), vorzugsweise eines Fahrzeugaufbaus eines mit dem Fahrzeugantriebsstrang (2) ausgeführten Fahrzeuges (8) und die Antriebsträgheit und die Trägheit der Zwischenwelle, und zumindest Übersetzungen (i1 bis i12) im Bereich der Getriebeeinrichtung (1) sowie Drehbeschleunigungen von Wellen des Fahrzeugantriebsstranges (2), insbesondere von Wellen im Bereich der Getriebeeinrichtung, sowie im Fahrzeugantriebsstrang (2) wirkende Drehmomente be-

**8.** Verfahren nach einem der Ansprüche 1 bis 7, **dadurch gekennzeichnet, dass** mehrere Zielvorgaben in Form eines zu minimierenden oder zu maximierenden funktionalen Zusammenhangs und die Grenzwerte der Betriebszustandsgrößen in Form von Ungleichungen der Optimierungsroutine (B1) zugeführt werden.

**9.** Verfahren nach einem der Ansprüche 1 bis 8, **dadurch gekennzeichnet, dass** der Optimierungsroutine (B1) mehrere Zielvorgaben als Eingangsgrößen zugeführt werden und der Schaltablauf in Abhängigkeit einer Mehrzieloptimierung erstellt wird, wobei zwischen den Zielvorgaben ein gezielter Kompromiss einstellbar ist.

**10.** Verfahren nach einem der Ansprüche 1 bis 9, **dadurch gekennzeichnet, dass** der Schaltablauf in Abhängigkeit einer Bauteilbelastung während des Übersetzungswechsels, vorzugsweise in Abhängigkeit einer Belastung im Bereich der an dem Übersetzungswechsel beteiligten Schaltelemente (A bis F) bestimmt wird.

**11.** Verfahren nach einem der Ansprüche 1 bis 10, **dadurch gekennzeichnet, dass** der Schaltablauf in Abhängigkeit eines definierten Schaltzeitzeitintervalls, innerhalb welcher der Übersetzungswechsel durchzuführen ist, bestimmt wird.

**12.** Verfahren nach einem der Ansprüche 1 bis 11, **dadurch gekennzeichnet, dass** der Schaltablauf in Abhängigkeit einer definierten maximal zulässigen Änderung eines im Bereich des Antriebs (3) anliegenden Drehmomentes bestimmt wird.

**13.** Verfahren nach einem der Ansprüche 1 bis 12, **dadurch gekennzeichnet, dass** der Schaltablauf in Abhängigkeit von definierten maximal zulässigen Drehmomentwerten im Bereich des Fahrzeugantriebsstranges (2), vorzugsweise von im Bereich der an dem Übersetzungswechsel beteiligten Schaltelemente (A bis F) anliegenden Drehmomentwerten, bestimmt wird.

**14.** Verfahren nach einem der Ansprüche 1 bis 13, **dadurch gekennzeichnet, dass** der Schaltablauf in Abhängigkeit von definierten maximal zulässigen Drehzahlen und/oder Gradienten von Drehzahlverläufen im Bereich des Fahrzeugantriebsstranges, vorzugsweise von Drehzahlen und/oder Gradienten von Drehzahlverläufen von Wellen der Getriebeeinrichtung (1), bestimmt wird.

**Claims**

**1.** Method for determining a shift sequence of a change of transmission ratio of a gear mechanism device (1) of a vehicle drive train (2) having a drive machine (3) which is connected to the gear mechanism device (1) on the drive mechanism input side and an output (4) which is operatively connected to the gear mechanism device (1) on the gear mechanism output side, starting from an actual transmission ratio engaged in the gear mechanism device (1) in the direction of a target transmission ratio which is to be applied in the gear mechanism device (1), wherein in order to carry out the change of transmission ratio at least one shift element (A to F) is to be disconnected from a force flux of the vehicle drive train (2), and at least one further shift element (A to F) is to be connected into the force flux, wherein the shift sequence is determined as a function of an operating state of the vehicle drive train (2) which is present when an actual transmission ratio is engaged in the gear mechanism device (1), wherein the operating state is **characterized by** various operating state variables of the vehicle drive train (2), which represent input variables of a model (B2) which models the vehicle drive train, and wherein output variables of the model (B2), at least one target prescription which characterizes the shift sequence and is determined applicatively, in the form of a functional relationship, and limiting values of operating state variables or of combinations of operating state variables are fed as input variables to an optimization routine (B1) in the region of which the functional relationship of the at least one target prescription is minimized, and additionally torque profiles which represent the shift sequence, of devices (3, A to F) of the vehicle drive train (2) are determined as a function of the minimum of the functional relationship of the at least one target prescription taking into account the limiting values of the operating state variables, in the region of which in each case a torque is applied to the vehicle drive train (2) and/or a torque which is conducted in the vehicle drive train (2) is changed during the change of the transmission ratio, **characterized in that** the minimization of the at least one target prescription is carried out iteratively and the profiles of the torques are determined iteratively by means of the optimization routine.

**2.** Method according to Claim 1, **characterized in that** the optimization routine comprises a locally converging optimization method.

**3.** Method according to Claim 2, **characterized in that** the optimization routine comprises an optimization method which is subject to derivation or is linear.

**4.** Method according to one of Claims 1 to 3, **charac-**

**terized in that** the shift sequence is divided into various shift sequence phases, wherein the individual shift sequence phases each constitute at least one transition phase, during which the shift element (A to F) which is to be switched off in order to carry out the requested change of transmission ratio is transferred from a closed operating state into a slipping mode, or the shift element (A to F) which is to be switched on in order to carry out the requested change of transmission ratio is transferred into a closed operating state in order to maintain a continuous profile of a differential rotational speed acceleration, and at least one sliding phase, during which in each case a differential rotational speed in the region of the shift element (A to F) which is to be switched on in order to carry out the requested change of transmission ratio is reduced.

5. Method according to Claim 4, **characterized in that** the shift sequence is determined sequentially for each shift sequence phase by means of the optimization routine (B1).

6. Method according to Claim 4, **characterized in that** the shift sequence is determined by means of the optimization routine (B1) while simultaneously taking into account all the shift sequence phases.

7. Method according to one of Claims 1 to 6, **characterized in that** the model (B2) which models the vehicle drive train (2) takes into account all the mass inertia units of the vehicle drive train (2), preferably of a vehicle body of a vehicle (8) which is embodied with the vehicle drive train (2), and the drive inertia and the inertia of the individual shaft and at least transmission ratios (i1 to il2) in the region of the gear mechanism device (1) as well as rotational accelerations of shafts of the vehicle drive train (2), in particular of shafts in the region of the gear mechanism device, as well as torques acting in the vehicle drive train (2).

8. Method according to one of Claims 1 to 7, **characterized in that** a plurality of target prescriptions in the form of a functional relationship which is to be minimized or maximized, and the limiting values of the operating state variables in the form of inequations are fed to the optimization routine (B1).

9. Method according to one of Claims 1 to 8, **characterized in that** a plurality of target prescriptions are fed as input variables to the optimization routine (B1), and the shift sequence is produced as a function of a multi-target optimization, wherein a targeted compromise can be set between the target prescriptions.

10. Method according to one of Claims 1 to 9, **characterized in that** the shift sequence is determined as a function of a component load during the change of transmission ratio, preferably as a function of a load in the region of the shift elements (A to F) which are involved in the change of transmission ratio.

11. Method according to one of Claims 1 to 10, **characterized in that** the shift sequence is determined as a function of a defined shifting-time time interval, within which the change of transmission ratio is to be carried out.

12. Method according to one of Claims 1 to 11, **characterized in that** the shift sequence is determined as a function of a defined, maximum permissible change in a torque which is present in the region of the drive (3) .

13. Method according to one of Claims 1 to 12, **characterized in that** the shift sequence is determined as a function of defined, maximum permissible torque values in the region of the vehicle drive train (2), preferably of torque values which are present in the region of the shift elements (A to F) which are involved in the change of transmission ratio.

14. Method according to one of Claims 1 to 13, **characterized in that** the shift sequence is determined as function of defined, maximum permissible rotational speeds and/or gradients of rotational speed profiles in the region of the vehicle drive train, preferably of rotational speeds and/or gradients of rotational speed profiles of shafts of the gear mechanism device (1).

**Revendications**

1. Procédé de détermination d'une séquence de changement de vitesse d'un changement de rapport d'un dispositif de transmission (1) d'une chaîne cinématique de véhicule (2) comportant une machine d'entraînement (3) reliée, du côté d'entrée de transmission, au dispositif de transmission (1), et un dispositif entraîné (4) relié fonctionnellement, du côté de sortie de transmission, au dispositif de transmission (1), à partir d'un rapport instantané devant être engagé dans le dispositif de transmission (1) dans la direction d'un rapport cible devant être engagé dans le dispositif de transmission (1), dans lequel, pour mettre en oeuvre le changement de rapport, au moins un élément de changement de vitesse (A à F) doit être sorti d'un flux de force de la chaîne cinématique de véhicule (2) et au moins un autre élément de changement de vitesse (A à F) doit être introduit dans le flux de force, dans lequel la séquence de changement de vitesse est déterminée en fonction d'un état de transmission de la chaîne cinématique de véhicule (2), lequel état de transmission est présent pour un rapport instantané engagé dans le dispositif de transmission (1), dans lequel l'état de transmission est **caractérisé par** diverses grandeurs d'état de transmission de la chaîne cinématique de véhicule (2), qui représentent des grandeurs d'entrée d'un modèle (B2) de la chaîne cinématique de véhicule, et dans lequel des grandeurs de sortie du modèle (B2), au moins un objectif caractérisant la séquence de changement de vitesse déterminé à des fins d'application sous forme d'une relation fonctionnelle et des valeurs limites de grandeurs d'état de transmission ou de combinaisons de grandeurs d'état de transmission, sont délivrés en tant que grandeurs d'entrée d'une routine d'optimisation (B1), dans le domaine desquelles une minimisation de la relation fonctionnelle de l'au moins un objectif est effectuée et les séquences de couples représentant la séquence de changement de vitesse de dispositifs (3, A à F) de la chaîne cinématique de véhicule (2) sont en outre déterminées en fonction du minimum de la relation fonctionnelle de l'au moins un objectif en tenant compte des valeurs limites des grandeurs d'état de transmission, dans le domaine desquelles un couple respectif est engagé dans la chaîne cinématique de véhicule (2) et/ou un couple introduit dans la chaîne cinématique de véhicule (2) est modifié pendant le changement de rapport, **caractérisé en ce que** la minimisation de l'au moins un objectif est effectuée de manière itérative et **en ce que** les séquences des couples sont déterminées de manière itérative par l'intermédiaire de la routine d'optimisation.

2. Procédé selon la revendication 1, **caractérisé en ce que** la routine d'optimisation comprend un procédé d'optimisation localement convergent.

3. Procédé selon la revendication 2, **caractérisé en ce que** la routine d'optimisation comprend un procédé d'optimisation du type à dérivation ou linéaire.

4. Procédé selon l'une quelconque des revendications 1 à 3, **caractérisé en ce que** la séquence de changement de vitesse est divisée en diverses de phases de la séquence de changement de vitesse, dans lequel les phases individuelles de la séquence de changement de vitesse représentent au moins une phase de transition pendant laquelle un élément de changement de vitesse (A à F) devant être désactivé pour l'exécution du changement de rapport demandé est amené à basculer d'un état de transmission fermé à un mode de transmission à glissement, ou l'élément de changement de vitesse (A à F) devant être activé pour l'exécution du changement de rapport demandé est amené à basculer à un état de transmission fermé en respectant une séquence continue d'une accélération de la vitesse de rotation différentielle, et au moins une phase de glissement lors de laquelle une vitesse de rotation différentielle est réduite dans la région de l'élément de changement de vitesse (A à F) devant être activé pour l'exécution du changement de rapport demandé.

5. Procédé selon la revendication 4, **caractérisé en ce que** la séquence de changement de vitesse est obtenue séquentiellement par l'intermédiaire de la routine d'optimisation (B1) pour chaque phase de la séquence de changement de vitesse.

6. Procédé selon la revendication 4, **caractérisé en ce que** la séquence de changement de vitesse est déterminée par l'intermédiaire de la routine d'optimisation (B1) en tenant compte simultanément de toutes les phases de la séquence de changement de vitesse.

7. Procédé selon l'une quelconque des revendications 1 à 6, **caractérisé en ce que** toutes les inerties de la chaîne cinématique de véhicule (2), de préférence, d'une structure de véhicule d'un véhicule (8) équipé de la chaîne cinématique de véhicule (2) et l'inertie de la transmission ainsi que l'inertie de l'arbre intermédiaire, et au moins les rapports (i1 à il2) dans la région du dispositif de transmission (1) ainsi que les accélérations de rotation d'arbres de la chaîne cinématique de véhicule (2), notamment d'arbres se trouvant dans la région du dispositif de transmission, ainsi que les couples agissant dans la chaîne cinématique de véhicule (2), sont pris en compte par l'intermédiaire du modèle (B2) de la chaîne cinématique de véhicule (2).

8. Procédé selon l'une quelconque des revendications 1 à 7, **caractérisé en ce qu'**une pluralité d'objectifs sont fournis sous la forme d'une relation fonctionnelle à minimiser ou à maximiser et **en ce que** les valeurs limites des grandeurs d'état de transmission sont fournies sous la forme d'inéquations de la routine d'optimisation (B1).

9. Procédé selon l'une quelconque des revendications 1 à 8, **caractérisé en ce qu'**une pluralité d'objectifs sont fournis à la routine d'optimisation (B1) sous la forme de grandeurs d'entrée et **en ce que** la séquence de changement de vitesse est établie en fonction d'une optimisation multi-objectifs, dans lequel un compromis ciblé peut être réglé entre les objectifs.

10. Procédé selon l'une quelconque des revendications 1 à 9, **caractérisé en ce que** la séquence de changement de vitesse est déterminée pendant le changement de rapport, de préférence en fonction d'une charge dans la région des éléments de changement de vitesse (A à F) intervenant dans le changement de rapport.

**11.** Procédé selon l'une quelconque des revendications 1 à 10, **caractérisé en ce que** la séquence de changement de vitesse est déterminée en fonction d'un intervalle de temps de changement de vitesse défini au cours duquel le changement de rapport est effectué.

**12.** Procédé selon l'une quelconque des revendications 1 à 11, **caractérisé en ce que** la séquence de changement de vitesse est déterminée en fonction d'une variation maximale admissible définie d'un couple appliqué dans la région de la transmission (3) .

**13.** Procédé selon l'une quelconque des revendications 1 à 12, **caractérisé en ce que** la séquence de changement de vitesse est déterminée en fonction de valeurs maximales admissibles définies du couple dans la région de la chaîne cinématique de véhicule (2), de préférence de valeurs de couple appliquées dans la région des éléments de changement de vitesse (A à F) intervenant dans le changement de rapport.

**14.** Procédé selon l'une quelconque des revendications 1 à 13, **caractérisé en ce que** la séquence de changement de vitesse est déterminée en fonction de vitesses de rotation et/ou de gradients maximaux admissibles définis de séquences de vitesses de rotation dans la région de la chaîne cinématique de véhicule, de préférence de vitesses de rotation et/ou de gradients de séquences de vitesses de rotation d'arbres du dispositif de transmission (1).

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008008065 A


**In der Beschreibung aufgeführte Nicht-Patentliteratur**

- **ING. H. BINZ.** *Gruppenschaltungsansteuerung von Nutzfahrzeuggetrieben,* 2004